# EUROPEAN PATENT SPECIFICATION

(11) **EP 3 364 084 B1**
(45) Date of publication and mention of the grant of the patent: **11.12.2019**
(21) Application number: 18157132.4
(22) Date of filing: 16.02.2018
(51) Int. Cl.: F16K 31/163, F16K 37/00

(54) **MECHANICAL DEVICE PROVIDED WITH AT LEAST TWO OPERATING CONDITIONS**
MECHANISCHE VORRICHTUNG MIT MINDESTENS ZWEI BETRIEBSZUSTÄNDEN
DISPOSITIF MÉCANIQUE POURVU D'AU MOINS DEUX ÉTATS DE FONCTIONNEMENT

(30) Priority: 20.02.2017 IT 201700018343
(43) Date of publication of application: 22.08.2018
(73) Proprietor: Innotec - Tecnologie Innovative S.r.l., 37135 Verona (IT)
(72) Inventor: ZAVARISE, Luca, 37010 COSTERMANO VR (IT); CARCERERI, Simone, 37042 CALDIERO VR (IT); PIATELLI, Andrea Fabio, 37026 PESCANTINA, Località Ospedaletto VR (IT)
(74) Representative: Modiano, Micaela Nadia

(56) References cited:
- DE-A1-102013 113 725
- JP-A- 2005 257 010
- US-A- 5 223 822

## Description

The present invention relates to a mechanical device provided with at least two operating conditions.

Mechanical devices, such as for example fluid flow control valves or the like, are known which are capable of operating between at least two operating conditions.

In general, these mechanical devices comprise a body that accommodates a movable element, which can be actuated between at least two operating positions by an actuation element which can be constituted by an actuator.

For example, in the case of flow control valves, the body of the mechanical device is constituted by the valve body which allows connection to the fluid flow ducts, while the movable element is constituted by the flow control element, which allows flow control of the fluid itself.

As is known, flow control valves are currently used, in particular in fluid treatment plants, in which the flow control element can be actuated between the open condition and the closed condition of the valve by an actuator constituted by a pneumatic cylinder, which acts on the flow control element of the valve with the stem of the corresponding piston.

Typically, these flow control valves are provided with a device for the luminous indication of their open or closed condition, which is usually constituted by LED lamps or incandescent lamps with an adapted electronic control unit, inserted in protective transparent or translucent hermetic cases and applied to one side of the body of the actuator. The lamps have different colors and are turned on selectively depending on the open or closed condition assumed by the flow control element, which is detected by means of an adapted sensor associated with the electronic control unit of the lamps.

The main drawback of these indication devices is that they are visible only from certain viewing angles and with difficulty at a great distance from the valve. DE 10 2013 113 725 A1 discloses a mechanical device comprising a luminous indication device according to the preamble of claim 1.

The aim of the present invention is to provide a mechanical device provided with at least two operating conditions which is capable of improving the background art in one or more of the aspects indicated above.

Within this aim, an object of the invention is to provide a mechanical device provided with at least two operating conditions that can have a device for indicating its operating conditions that allows optimal visibility of the emitted luminous signal from any viewing point.

Another object of the invention is to provide a mechanical device provided with at least two operating conditions which, by virtue of the particular constructive characteristics, can be provided with a reduced number of components and by means of commonly commercially available elements and materials so that it can be manufactured easily at modest costs.

Another object of the present invention is to provide a mechanical device provided with at least two operating conditions that is capable of offering the greatest assurances of reliability and safety.

A further object of the invention is to provide a mechanical device provided with at least two operating conditions that can be safely immersed in liquids.

Furthermore, an object of the present invention is to overcome the drawbacks of the background art in a manner that is alternative to any existing solutions.

This aim and these and other objects which will become better apparent hereinafter, are achieved by a mechanical device provided with at least two operating conditions according to claim 1, optionally provided with one or more of the characteristics of the dependent claims.

Further characteristics and advantages of the invention will become better apparent from the description of a preferred but not exclusive embodiment of the mechanical device provided with at least two operating conditions according to the invention, illustrated by way of nonlimiting example in the accompanying drawings, wherein:

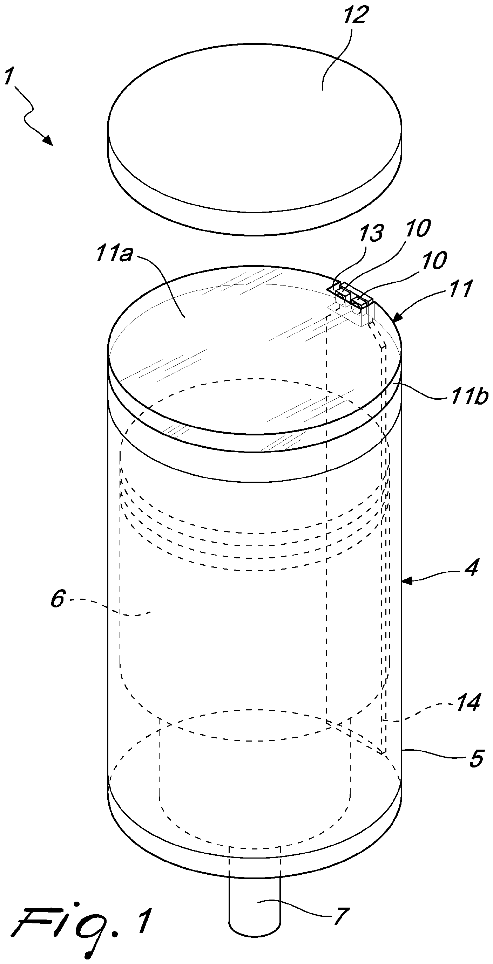

Figure 1 is a partially exploded perspective view of an actuator of the mechanical device according to the invention;

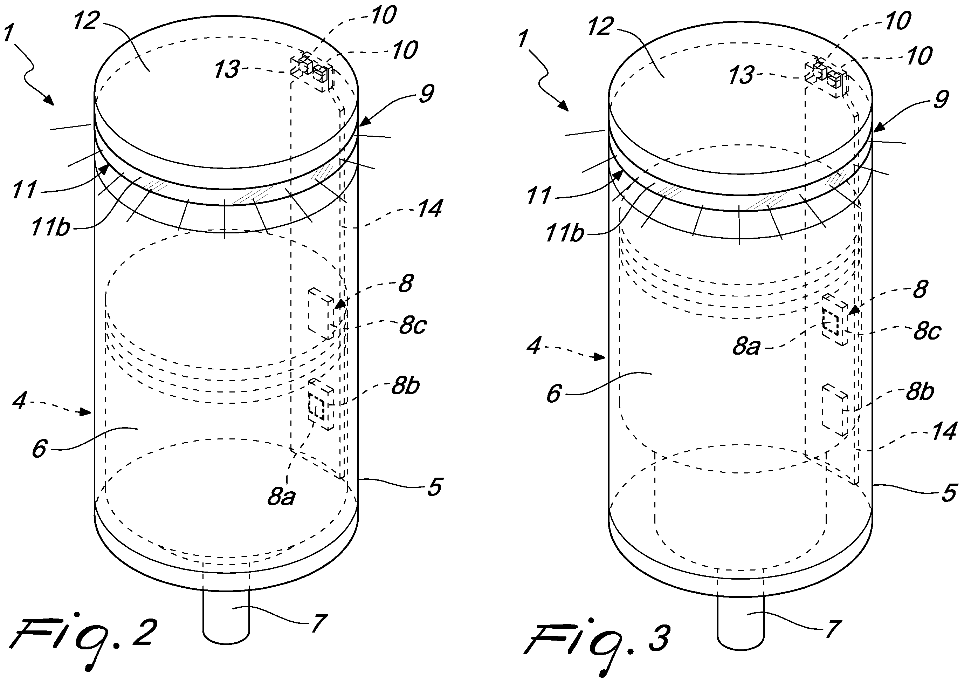

Figures 2 and 3 are perspective views, partially in phantom lines, of the actuator of the mechanical device according to the invention in two different operating conditions;

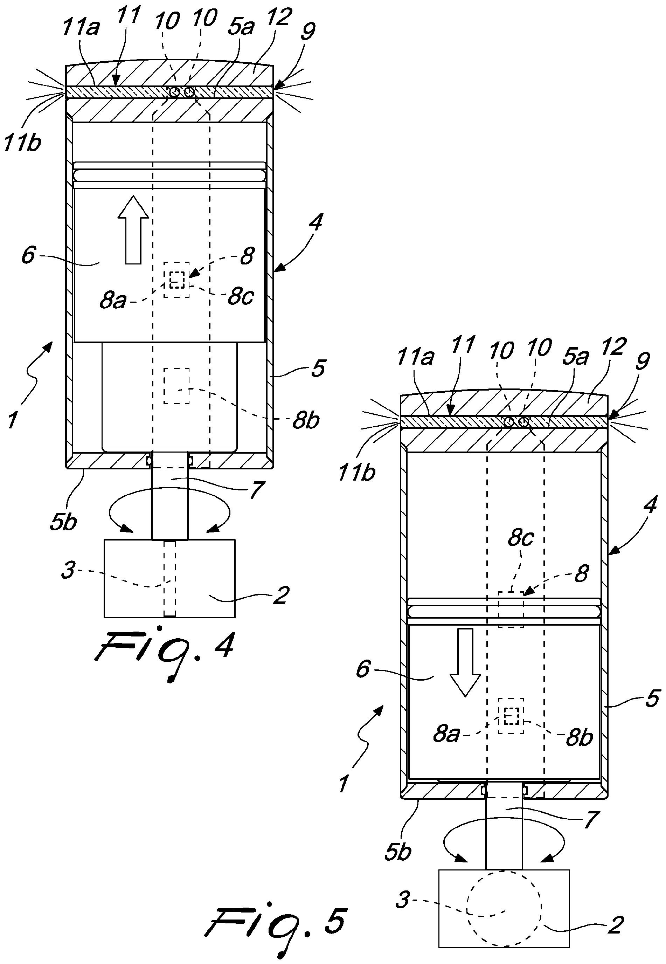

Figures 4 and 5 are schematic and partially longitudinally sectional views of the mechanical device according to the invention in two different operating conditions;

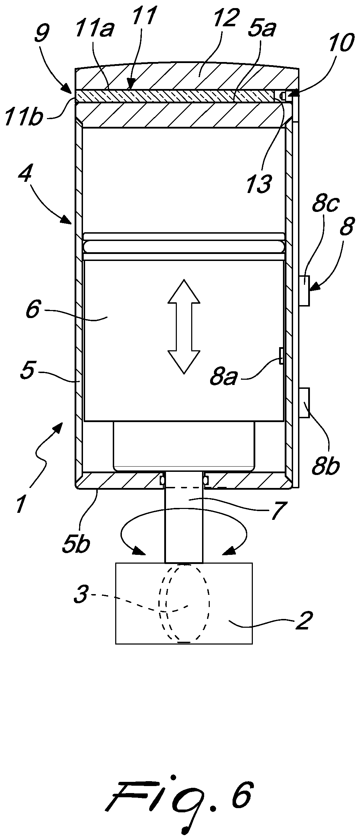

Figure 6 is a schematic and partially sectional view, taken along a plane that is different from the one of the sectional views of Figures 4 and 5, of the mechanical device according to the invention in a condition that is intermediate with respect to those of Figures 4 and 5.

With reference to the figures, the mechanical device provided with least two operating conditions, designated generally by the reference numeral 1, can be constituted for example by a fluid flow control valve.

In particular, the device according to the invention comprises a body 2 which is constituted, in the illustrated example, by a valve body, which accommodates internally a movable element constituted, in the case of the illustrated example, by a flow control element 3, which can be actuated on command by an actuator 4 between at least one first position, for example a closed position of the valve, and at least one second position, for example an open position of said valve.

The actuator 4 comprises an internally hollow cylindrical body 5, within which a piston 6 can slide axially which is connected, in a per se known manner, by means of a stem 7, to the flow control element 3, so as to be able to produce the transition of said flow control element from the closed position to the open position and vice versa, as a consequence of the translation of the piston 6, in one direction or the other, along the axis of the cylindrical body 5, due to the inflow or outflow of a working fluid into or from the cylindrical body 5 through adapted intake/discharge ports.

The position assumed by the flow control element 3 is detected by a sensor 8, to which a luminous indication device 9 is functionally connected which has the function of emitting a different luminous signal depending on whether the sensor 8 detects the closed position or the open position of the flow control element 3.

The sensor 8 can be constituted for example by a sensor for detecting the relative position of the piston 6 or of the stem 7 with respect to the cylindrical body 5, capable therefore of detecting, on the basis of the position of the piston 6 or of the stem 7, the position of the flow control element 3.

In particular, the sensor 8 can conveniently comprise, as shown by way of example in the figures, an emitter 8a of a position signal, which is integral with the piston 6, and at least two elements 8b and 8c for receiving the signal emitted by the emitter 8a, which are integral with the cylindrical body 5 and are arranged substantially at the positions assumed by the piston 6 in the positions to be detected of the flow control element 3 and are capable of detecting the signal emitted by the emitter 8a when it is located thereat.

According to the invention, the luminous indication device 9 comprises one or more LED light sources 10, which face at least one portion of a light diffuser 11 which has a substantially plate-like body 11a arranged, with its plane of arrangement, substantially at right angles to the axis of the cylindrical body 5, so as to emit, from its perimetric edge 11b outward, the light that arrives from the light sources 10, so as to diffuse it around the axis of the cylindrical body 5.

In this manner, the light emitted by the light sources 10 is visible from any viewing angle with respect to the axis of the cylindrical body 5 of the actuator 4.

Conveniently, the substantially plate-like body 11a of the light diffuser 11 is made of an optically transparent polymeric material, such as for example polymethylmethacrylate, polycarbonate or the like, and is advantageously arranged with its perimetric edge 11b substantially at the outer lateral surface 5a of the cylindrical body 5, being practically flush with it.

Advantageously, the substantially plate-like body 11a comprises a flat plate, which conveniently has a substantially disk-like shape and is arranged at right angles to the axis of the cylindrical body 5.

As in the illustrated example, the substantially plate-like body 11a of the light diffuser 11 can be mounted between one end 5a of the cylindrical body 5, in particular the one that lies opposite the end 5b from which the stem 7 exits, and a closure lid 12.

In particular, the closure lid 12 is conveniently made of opaque material and advantageously can have a surface that is directed toward the substantially plantlike body 11a that is adapted to reflect light.

According to the invention, in the substantially plate-like body 11a there is a receptacle 13 that is designed to accommodate internally the light sources 10, so that they can be arranged in a central region of the thickness of the substantially plate-like body 11a. Such receptacle 13 is constituted conveniently by a recess provided in the substantially plate-like body 11a.

Advantageously, the receptacle 13 is located at the peripheral region of the substantially plate-like body 11a and more particularly at its perimetric edge 11b.

According to the invention, the light sources 10 are associated with an electronic board 14 which also supports the sensor 8.

The electronic board 14 is advantageously embedded in a protective resin, so as to allow its immersion in liquids, and is conveniently coupled to the cylindrical body 5 of the actuator 4.

In particular, the electronic board 14 is provided with an elongated extension and is fixed to the external surface of the cylindrical body 5, with its axis of extension arranged substantially parallel to the axis of the cylindrical body 5.

Conveniently, the fixing of the electronic board 14 to the cylindrical body 5 can be provided by means of screws accommodated in through holes which are formed substantially at the opposite longitudinal ends of the electronic board 14 and are arranged so as to be aligned with locator holes provided in preset positions on the cylindrical body 5 in order to allow the correct positioning of the sensor 8 supported by the electronic board 14 along the axis of said cylindrical body.

In greater detail, the light sources 10 are located at the longitudinal end of the electronic board 14 that is arranged toward the end 5a of the cylindrical body 5 on which the substantially plate-like body 11a is mounted, arranging itself so that the light sources 10 are inserted in the receptacle 13 provided in the substantially plate-like body 11a.

Conveniently, the light sources 10 are controlled by the electronic board 14 to emit light of a different color depending on the position of the flow control element 3 that is detected by the sensor 8.

More particularly, the light sources 10 can be constituted by at least one first LED device which is adapted to emit a light of a first color, for example a green color, and is designed to be activated upon the detection, on the part of the sensor 8, of the open position of the flow control element 3, and by at least one second LED device which is adapted to emit a light of a second color, for example a red color, and is designed to be activated upon the detection, on the part of the sensor 8, of the closed position of the flow control element 3.

The operation of the invention is as follows.

As a function of the position of the flow control element 3 detected by the sensor 8, the electronic board 14 actuates the activation of the sources 10 so that the light sources 10 emit light of a color that corresponds to the position assumed by the flow control element 3.

More particularly, when the sensor 8 detects that the flow control element 3 is in the open position of the valve, the electronic board 14 actuates the lighting of the first LED device, while the second LED device is kept off.

If instead, as a consequence of the activation of the actuator 4, the flow control element 3 is moved from the open position to the closed position, the detection on the part of the sensor 8 of the arrangement of the flow control element 3 in the closed position would entail, on the part of the electronic board 14, the lighting of the second LED device and the power-off of the first LED device.

The light of the light sources 10 thus emitted propagates through the substantially plate-like body 11a of the diffuser 11, exiting outward from its perimetric edge 11b, thus diffusing all around the axis of the cylindrical body 5.

In practice it has been found that the invention achieves the intended aim and objects and in particular the fact is stressed that the valve according to the invention is provided with a luminous indication device that allows perfect viewing of the emitted luminous signal from multiple different viewing points with respect to the background art.

All the characteristics of the invention indicated above as advantageous, convenient or the like may also be omitted or be replaced with equivalents.

The individual characteristics presented with reference to general teachings or particularly embodiments may all be present in other embodiments or may replace characteristics in these embodiments.

The invention thus conceived is susceptible of numerous modifications and variations, all of which are within the scope of the appended claims; furthermore, all the details may be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A mechanical device provided with at least two operating conditions, comprising a device body (2) which supports a movable element (3) that can be actuated on command by an actuator (4) between at least one first position and at least one second position, said actuator (4) comprising a cylindrical body (5) within which a piston (6) can slide axially which is connected by means of a stem (7) to said movable element (3), a sensor (8) for detecting the position of said movable element (3) and a luminous indication device (9) functionally connected to said sensor (8) being provided, said luminous indication device (9) comprising at least one LED light source (10) which faces at least one portion of a light diffuser (11), wherein said light diffuser (11) has a body (11a) arranged so that its plane of arrangement is substantially perpendicular to the axis of said cylindrical body (5) in order to emit, from its perimetric edge outward, the light that arrives from said at least one LED light source (10) around the axis of said cylindrical body (5), said at least one LED light source (10) being associated with an electronic board (14),
**characterized in that** the body (11a) of the light diffuser (11) is a substantially plate-like body, said at least one LED light source (10) being accommodated in a receptacle (13) provided in said substantially plate-like body (11a) and being arranged in a central region of the thickness of the substantially plate-like body (11a), the electronic board (14) supporting said sensor (8) and being fixed to the external surface of the cylindrical body (5).

2. The device according to claim 1, **characterized in that** said substantially plate-like body (11a) is made of an optically transparent polymeric material.

3. The device according to one or more of the preceding claims, **characterized in that** said substantially plate-like body (11a) is arranged so that its perimetric edge (11b) is located substantially at the outer lateral surface of said cylindrical body (5).

4. The device according to one or more of the preceding claims, **characterized in that** said substantially plate-like body (11a) is interposed between one end of said cylindrical body (5) and a closure lid (12).

5. The device according to one or more of the preceding claims, **characterized in that** said electronic board (14) is embedded in a protective resin.

6. The device according to one or more of the preceding claims, **characterized in that** said at least one LED light source (10) is controlled by said electronic board in order to emit light of a different color depending on the position of said flow control element (3) detected by said sensor (8).

7. The device according to one or more of the preceding claims, **characterized in that** it is constituted by a fluid flow control valve, said device body (2) being the valve body of said valve, said movable element (3) being the flow control element of said valve and being actuatable on command by said actuator (4) between a closed position and an open position of the valve.

## Patentansprüche

1. Eine mechanische Vorrichtung bereitgestellt mit mindestens zwei Betriebszuständen, umfassend einen Vorrichtungskörper (2), welcher ein bewegliches Element (3) trägt, das auf Befehl durch einen Stellantrieb (4) zwischen mindestens einer ersten Position und mindestens einer zweiten Position betätigt werden kann, wobei der Stellantrieb (4) einen zylindrischen Körper (5) umfasst, innerhalb dessen ein Kolben (6) axial gleiten kann, welcher mittels eines Schafts (7) mit dem genannten beweglichen Element (3) verbunden ist, einen Sensor (8) zum Detektieren der Position des genannten beweglichen Elements (3) und eine leuchtende Anzeigevorrichtung (9) funktional mit dem genannten bereitgestellten Sensor (8) verbunden, wobei die genannte leuchtende Anzeigevorrichtung (9) mindestens eine LED-Lichtquelle (10) umfasst, welche gegenüber von mindestens einem Teil eines Lichtdiffusors (11) liegt, worin der genannte Lichtdiffusor (11) einen Körper (11a) hat, so angebracht, dass seine Anordnungsebene im Wesentlichen senkrecht zu der Achse des genannten zylindrischen Körpers (5) ist, um von seiner äußeren Umfangskante das Licht, das von der genannten mindestens einen LED-Lichtquelle (10) um die Achse des genannte zylindrischen Körpers (5) herum ankommt, zu emittieren, wobei die mindestens eine LED-Lichtquelle (10) mit einer Elektronikkarte (14) verbunden ist, **dadurch gekennzeichnet, dass** der Körper (11a) des Lichtdiffusors (11) im Wesentlichen plattenförmig ist, wobei die genannte mindestens eine LED-Lichtquelle (10) in einer Aufnahme (13) untergebracht ist, die in dem genannten im Wesentlichen plattenförmigen Körper (11a) bereitgestellt ist und in einem mittleren Bereich der Dicke des im Wesentlichen plattenförmigen Körpers (11a) angeordnet ist, wobei die Elektronikkarte (14) den genannten Sensor (8) trägt und an die externe Oberfläche des zylindrischen Körpers (5) fixiert ist.

2. Die Vorrichtung gemäß Anspruch 1, **dadurch gekennzeichnet, dass** der im Wesentlichen plattenförmige Körper (11a) aus einem optisch transparenten Polymermaterial gefertigt ist.

3. Die Vorrichtung gemäß einem oder mehreren der vorhergehenden Ansprüche, **dadurch gekennzeichnet, dass** der genannte im Wesentlichen plattenförmige Körper (11a), so angeordnet ist, dass seine Umfangskante (11b) im Wesentlichen an der äußeren Seitenfläche des genannten zylindrischen Körpers (5) angeordnet ist.

4. Die Vorrichtung gemäß einem oder mehreren der vorhergehenden Ansprüche, **dadurch gekennzeichnet, dass** der genannte im Wesentlichen plattenförmige Körper (11a), zwischen einem Ende des genannten zylindrischen Körpers (5) und einem Verschlussdeckel (12) ist.

5. Die Vorrichtung gemäß einem oder mehreren der vorhergehenden Ansprüche, **dadurch gekennzeichnet, dass** die genannte Elektronikkarte (14) in einem Schutzharz eingebettet ist.

6. Die Vorrichtung gemäß einem oder mehreren der vorhergehenden Ansprüche, **dadurch gekennzeichnet, dass** die genannte mindestens eine LED-Lichtquelle (10) durch die genannte Elektronikkarte gesteuert wird, um Licht einer unterschiedlichen Farbe abhängig von der Position des genannten Durchflusssteuerelements (3), detektiert durch den genannten Sensor (8), zu emittieren.

7. Die Vorrichtung gemäß einem oder mehreren der vorhergehenden Ansprüche, **dadurch gekennzeichnet, dass** sie aus einem Flüssigkeitsströmungs-Steuerventil besteht, wobei der genannte Vorrichtungskörper (2) der Ventilkörper des genannten Ventils ist, wobei das genannte bewegliche Element (3) das Durchfluss-Steuerelement des genannte Ventils ist und auf Befehl durch den genannten Stellantrieb (4) zwischen einer geschlossenen Position und einer offenen Position des Ventils betätigbar ist.

## Revendications

1. Dispositif mécanique, muni d'au moins deux états de fonctionnement, comprenant un corps (2) de dispositif, qui supporte un élément mobile (3), qui peut être actionné sur commande par un actionneur (4) entre au moins une première position et au moins une seconde position, ledit actionneur (4) comprenant un corps cylindrique (5), dans lequel un piston (6) peut coulisser axialement, qui est relié au moyen d'une tige (7) audit élément mobile (3), un capteur (8), destiné à détecter la position dudit élément mobile (3) et un dispositif d'indication lumineuse (9), relié de manière fonctionnelle audit capteur (8), étant prévus, ledit dispositif d'indication lumineuse (9) comprenant au moins une source lumineuse à DEL (10), qui fait face à au moins une partie d'un diffuseur de lumière (11), dans lequel ledit diffuseur de lumière (11) a un corps (11a), agencé de sorte que son plan d'agencement est sensiblement perpendiculaire à l'axe dudit corps cylindrique (5), afin d'émettre, depuis son bord périmétrique vers l'extérieur, la lumière, qui arrive depuis ladite au moins une source lumineuse à DEL (10), autour de l'axe dudit corps cylindrique (5), ladite au moins une source lumineuse à DEL (10) étant associée à une carte électronique (14),
**caractérisé en ce que**
le corps (11a) du diffuseur de lumière (11) est un corps sensiblement similaire à une plaque, ladite au moins une source lumineuse à DEL (10) étant logée dans un réceptacle (13), prévu dans ledit corps sensiblement similaire à une plaque (11a) et étant agencée dans une région centrale de l'épaisseur du corps sensiblement similaire à une plaque (11a), la carte électronique (14) supportant ledit capteur (8) et étant fixée à la surface extérieure du corps cylindrique (5).

2. Dispositif selon la revendication 1,
**caractérisé en ce que**
ledit corps sensiblement similaire à une plaque (11a) est fait d'un matériau polymère optiquement transparent.

3. Dispositif selon une ou plusieurs des revendications précédentes,
**caractérisé en ce que**
ledit corps sensiblement similaire à une plaque (11a) est agencé de sorte que son bord périmétrique (11b) est situé sensiblement sur la surface latérale extérieure dudit corps cylindrique (5).

4. Dispositif selon une ou plusieurs des revendications précédentes,
**caractérisé en ce que**
ledit corps sensiblement similaire à une plaque (11a) est interposé entre une extrémité dudit corps cylindrique (5) et un couvercle de fermeture (12).

5. Dispositif selon une ou plusieurs des revendications précédentes,
**caractérisé en ce que**
ladite carte électronique (14) est incorporée dans une résine protectrice.

6. Dispositif selon une ou plusieurs des revendications précédentes,
**caractérisé en ce que**
ladite au moins une source lumineuse à DEL (10) est commandée par ladite carte électronique, afin d'émettre de la lumière d'une couleur différente en fonction de la position dudit élément de commande de flux (3), détecté par ledit capteur (8).

7. Dispositif selon une ou plusieurs des revendications précédentes,
**caractérisé en ce**
**qu'**il est constitué par une vanne de contrôle d'écoulement de fluide, ledit corps (2) de dispositif étant le corps de vanne de ladite vanne, ledit élément mobile (3) étant l'élément de contrôle d'écoulement de ladite vanne et pouvant être actionné sur commande par ledit actionneur (4) entre une position fermée et une position ouverte de la vanne.
